# EUROPEAN PATENT APPLICATION

(11) **EP 2 837 607 A1**
(43) Date of publication of application: **18.02.2015**
(21) Application number: 13775947.8
(22) Date of filing: 12.04.2013
(51) Int. Cl.: C03C 27/06, C03C 8/04, C03C 8/08, C03C 27/04, E06B 3/66

(54) **VACUUM MULTILAYER GLASS, SEALING MEMBER, AND METHOD FOR MANUFACTURING VACUUM MULTILAYER GLASS**

(30) Priority: 13.04.2012 JP 2012092368
(71) Applicant: Asahi Glass Company, Limited, Tokyo 100-8405 (JP)
(72) Inventor: MATSUMOTO, Syuji, Tokyo 100-8405 (JP); YOKOYAMA, Mika, Tokyo 100-8405 (JP)
(74) Representative: Müller-Boré & Partner Patentanwälte PartG mbB
(86) International application number: PCT/JP2013/061128
(87) International publication number: WO 2013/154193

(57) **Abstract**

A vacuum insulating glazing includes first and second glass substrates that are stacked with a gap set at a pressure less than an atmospheric pressure, and the gap is sealed peripherally by a sealing. The sealing includes a metal component and a glass layer that bonds the metal component and the glass substrates. A material for the metal component is selected from materials whose tensile strength X (N/mm²) and breaking elongation Y (%) satisfy a relationship Y ≧ 0.10X by a room temperature tensile test (tensile speed: 1 mm/min) that is performed after the materials are kept at 490 °C for 40 minutes in an atmosphere.

## Description

### TECHNICAL FIELD

The present invention relates to a vacuum insulating glazing, a sealing for a vacuum insulating glazing, and a method of producing a vacuum insulating glazing.

### BACKGROUND ART

"Vacuum insulating glazing" is formed by stacking a pair of glass substrates leaving a gap between them and maintaining the gap at a low pressure or in a vacuum state. A vacuum insulating glazing has excellent heat insulating properties, and is therefore widely used for windowpanes of, for example, buildings and residential houses.

The heat insulating properties of entire vacuum insulating glazing is greatly affected by a sealing performance of a sealing provided peripherally between glass substrates to maintain a gap in a vacuum state. When the sealing performance of the sealing is low, components of an atmospheric gasses, such as air and/or moisture easily enter into the gap, and the degree of vacuum of the gap is deteriorated. For this reason, research on a sealing having higher sealing performance is being conducted.

Particularly, "hybrid sealings", which are composed of a metal component and a non-metal component, are under development. For example, Patent Document 1 discloses using a "hybrid sealing" composed of a metal component and a low-melting ceramic frit for vacuum insulating glazing.

### [RELATED-ART DOCUMENT]

### [Patent Document]

[Patent Document 1] European Patent No. 2099997

### DISCLOSURE OF INVENTION

### PROBLEMS TO BE SOLVED BY THE INVENTION

As described above, Patent Document 1 discloses a "hybrid sealing" composed of a metal component and a low-melting ceramic frit.

However, to actually use the hybrid sealing disclosed by Patent Document 1 for vacuum insulating glazing, the bonding force between the metal component and the low-melting ceramic frit needs to be strong. When the bonding force between the metal component and the low-melting ceramic frit is weak, the "hybrid sealing" cannot provide an excellent sealing performance.

In Patent Document 1, no consideration is given to the bonding force between the metal component and the low-melting ceramic frit of the "hybrid sealing". Therefore, depending on a combination of materials of the metal component and the low-melting ceramic frit, the bonding force may become insufficient. Also, if such an insufficient combination is selected, it is not possible to form a "hybrid sealing" with an excellent sealing performance.

The present invention is made by taking into account the above mentioned background. One object of the present invention is to provide vacuum insulating glazing including a "hybrid sealing" including a metal component and a glass layer that bond well to each other. Another object of the present invention is to provide such a "hybrid sealing". Still another object of the present invention is to provide a method of producing a vacuum insulating glazing including such a "hybrid sealing".

### MEANS FOR SOLVING THE PROBLEMS

The present invention provides a vacuum insulating glazing including first and second glass substrates that are stacked leaving a gap through a "hybrid sealing" at a pressure less than an atmospheric pressure. The "hybrid sealing" includes a metal component and a glass layer that bonds the metal component and the glass substrates. A material for the metal component is selected from materials whose tensile strength X (N/mm²) and breaking elongation Y (%) satisfy a relationship Y ≧ 0.10X by a room temperature tensile test (tensile speed: 1 mm/min) that is performed after the materials are kept at 490 °C for 40 minutes in an atmosphere.

In the vacuum insulating glazing of the present invention, the metal component may have a thickness between 0.03 mm and 0.5 mm.

In the vacuum insulating glazing of the present invention, the material as the metal component may be selected from materials whose tensile strength X (N/mm²) and breaking elongation Y (%) do not satisfy the relationship Y ≧ 0.10X by a room temperature tensile test (tensile speed: 1 mm/min) that is performed before the materials are kept at 490 °C for 40 minutes in the atmosphere.

In the vacuum insulating glazing of the present invention, the metal component may include at least one component selected from the group consisting of pure aluminum, an aluminum alloy, pure titanium, and a titanium alloy.

In the vacuum insulating glazing of the present invention, the glass layer includes a glass component whose thermal expansion coefficient maybe greater than or equal to 70×10⁻⁷/K and less than or equal to 120×10⁻⁷/K.

In the present application, the thermal expansion coefficients indicate values at a temperature of between 50 °C and 250 °C.

In the vacuum insulating glazing of the present invention, the glass layer may include a glass component that is ZnO-Bi₂O₃-B₂O₃ glass.

In this case, the glass component included in the glass layer may have the following composition in terms of mass percentage of oxide:
Bi₂O₃ 70%-90%, ZnO 5%-15%, B₂O₃ 2%-8%, Al₂O₃ 0.1%-5%, SiO₂ 0.1%-2%, CeO₂ 0.1%-5%, Fe₂O₃ 0.01%-0.2%, and CuO 0.01%-5%.

In the vacuum insulating glazing of the present invention, the glass layer includes a glass component that may be ZnO-SnO-P₂O₅ glass.

In this case, the glass component included in the glass layer may have the following composition in terms of mass percentage of oxide:
P₂O₅ 27%-35%, SnO 25%-35%, ZnO 25%-45%, B₂O₃ 0%-5%, Ga₂O₃ 0%-3%, CaO 0%-10%, SrO 0%-10%, Al₂O₃ 0%-3%, In₂O₃ 0%-3%, La₂O₃ 0%-3%, and Al₂O₃+In₂O₃+La₂O₃ 0%-7%.

In the vacuum insulating glazing of the present invention, the metal component may include a first portion and a second portion. The first portion of the metal component may be bonded to a first glass layer formed on the first glass substrate and the second portion of the metal component may be bonded to a second glass layer formed on the second glass substrate to form the peripheral seal.

The present invention also provides a sealing of a vacuum insulating glazing including first and second glass substrates stacked leaving with a gap that is set at a pressure less than an atmospheric pressure through the peripheral sealing. The sealing includes a metal component and a glass layer that bonds the metal component and the glass substrates. A material as the metal component is selected from materials whose tensile strength X (N/mm²) and breaking elongation Y (%) satisfy a relationship Y ≧ 0.10X by a room temperature tensile test (tensile speed: 1 mm/min) that is performed after the materials are kept at 490 °C for 40 minutes in an atmosphere.

The present invention also provides a method of producing a vacuum insulating glazing including first and second glass substrates stacked leaving with a gap that is set at a pressure less than an atmospheric pressure. The method includes forming a first glass layer on the first glass substrate and forming a second glass layer on the second glass substrate; forming an assembly including the gap formed therein by combining a metal component with the first and second substrates such that the metal component contacts the first and second glass layers; heating at least the first and second glass layers of the assembly to bond the first and second glass layers and the metal component; and depressurizing the gap. A material as the metal component is selected from materials whose tensile strength X (N/mm²) and breaking elongation Y (%) satisfy a relationship Y ≧ 0.10X by a room temperature tensile test (tensile speed: 1 mm/min) that is performed after the materials are kept at 490 °C for 40 minutes in an atmosphere.

In the heating process, at least the first and second glass layers of the assembly may be kept at a temperature between 470 °C and 530 °C for a period of time between one minute and one hour, and then cooled to a room temperature.

### ADVANTAGEOUS EFFECT OF THE INVENTION

The present invention makes it possible to provide vacuum insulating glazing including a "hybrid sealing" including a metal component and a glass layer that bond well to each other. The present invention also makes it possible to provide such a "hybrid sealing". The present invention also makes it possible to provide a method of producing a vacuum insulating glazing including such a "hybrid sealing".

### BRIEF DESCRIPTION OF THE DRAWINGS

FIG. 1 is a schematic diagram illustrating an exemplary configuration of vacuum insulating glazing according to the present invention;
FIG. 2 is a drawing illustrating a problem that is likely to occur when forming a hybrid sealing on a glass substrate by bonding a metal component and a glass layer by a heat treatment;
FIG. 3 is a flowchart illustrating an exemplary method of producing vacuum insulating glazing according to the present invention;
FIG. 4 is a graph plotting relationships between tensile strength and breaking elongation of metal materials of samples 1-17 measured by a tensile test in a first example;
FIG. 5 is a schematic plan view of an evaluation specimen used in a second example;
FIG. 6 is a schematic diagram illustrating a configuration of a test apparatus used for a bonding force evaluation test;
FIG. 7 is a graph illustrating a relationship between a displacement (mm) and a load (N) in a bonding force evaluation test using an evaluation specimen No. 1; and
FIG. 8 is a graph illustrating a relationship between displacement (mm) and a load (N) in a bonding force evaluation test using an evaluation specimen No. 4.

### DESCRIPTION OF EMBODIMENTS

Embodiments of the present invention are described below with reference to the accompanying drawings.

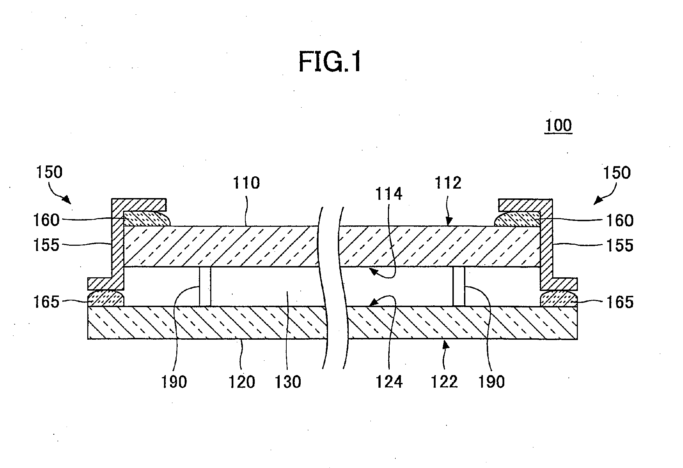

FIG. 1 is a schematic diagram illustrating an exemplary configuration of vacuum insulating glazing according to the present invention.

As illustrated by FIG. 1, vacuum insulating glazing 100 of the present invention includes a first glass substrate 110, a second glass substrate 120, a gap 130 formed between the first glass substrate 110 and the second glass substrate 120, and a sealing 150 for sealing the gap 130.

The first glass substrate 110 includes a first surface 112 and a second surface 114. The first glass substrate 110 is disposed such that the first surface 112 forms an outer surface of the vacuum insulating glazing 100. Similarly, the second glass substrate 120 includes a first surface 122 and a second surface 124. The second glass substrate 120 is disposed such that the first surface 122 forms an outer surface of the vacuum insulating glazing 100. Accordingly, the gap 130 is formed between the second surface 114 of the first glass substrate 110 and the second surface 124 of the second glass substrate 120.

Normally, the gap 130 is maintained in a vacuum state. The vacuum pressure in the hap 130 may be any value that is lower than the atmospheric pressure. Generally, the pressure in the gap 130 is between about 0.001 Pa and about 0.2 Pa.

The gap 130 may be filled with an inert gas such as argon at a pressure lower than the atmospheric pressure. Thus, in the present application, a gap in "vacuum insulating glazing" may not necessarily be in a vacuum state, and the term "vacuum insulating glazing" indicates any insulating glazing including a gap whose pressure is less than the atmospheric pressure.

When necessary, the vacuum insulating glazing 100 may include one or more spacers 190 in the gap 130. The spacers 190 maintain the gap 130 with the desired separation. However, the spacers 190 may be omitted when the gap 130 can be maintained with the desired separation without the spacers 190. For example, the spacers 190 may be omitted when the degree of vacuum in the gap 130 is low, or when the gap 130 is filled with an inert gas at a certain pressure.

The sealing 150 is a part for sealing the gap 130. In the example of FIG. 1, the sealing 150 is provided along the entire circumference of the gap 130 peripherally.

The sealing 150 is a "hybrid sealing" that includes a metal component 155 and first and second glass layers 160 and 165. As described later in more detail, the glass layers 160 and 165 which include a glass component are formed by heat-treating glass frit paste and bulk glass (e.g., glass fibers or glass ribbons).

As described above, Patent Document 1 discloses a "hybrid sealing" composed of a metal component and a low-melting ceramic frit as a sealing for vacuum insulating glazing. However, in Patent Document 1, no consideration is given to the bonding force between the metal component and the low-melting ceramic frit.

However, in considering whether to actually use the "hybrid sealing" for vacuum insulating glazing, the bonding force between the metal component and the low-melting ceramic frit is a very important factor. Particularly, depending on a combination of materials of the metal component and the low-melting ceramic frit, the bonding force between them may become insufficient and the "hybrid sealing" may become unusable as a sealing for vacuum insulating glazing.

For example, Patent Document 1 discloses a chromium metal and a stainless steel as metal materials for the "hybrid sealing". However, chromium metal is not generally used as a part of a structural component. Also, as described later in more detail, the inventors of the present invention have found out that a metal component and a low-melting ceramic frit do not bond together when a stainless steel is used as a metal material for a "hybrid sealing".

Thus, to use the "hybrid sealing" for vacuum insulating glazing, the bonding force between the metal component and the low-melting ceramic frit is very important.

On the other hand, according to the present invention, a metal component of a "hybrid sealing" is composed of a material selected from materials whose tensile strength X (N/mm²) and breaking elongation Y (%) satisfy a relationship Y ≧ 0.10X by a room temperature tensile test (tensile speed: 1 mm/min) that is performed after the materials are kept at 490 °C for 40 minutes in the atmosphere.

As described later in detail, the above heat treatment conditions for the metal component correspond to typical heat treatment conditions employed when forming a "hybrid sealing".

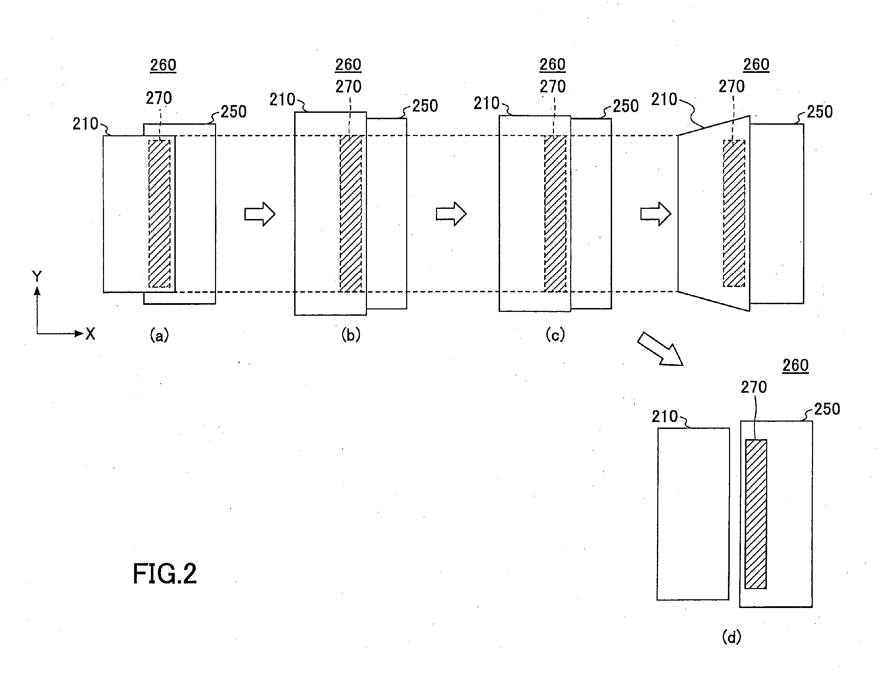

Next, advantageous effects of the present invention are described with reference to FIG. 2.

FIG. 2 is a drawing illustrating steps of forming a hybrid sealing on a glass substrate by bonding a metal component and a glass layer through heat treatment.

To form a hybrid sealing, a metal component 210 and a glass substrate 250 are first prepared as illustrated by FIG. 2 (a). The metal component 210 is placed on the glass substrate 250 such that the metal component 210 at least partially overlaps the glass substrate 250. As a result, an assembly 260 is formed.

Although invisible in FIG. 2 (a), a glass layer 270 is placed beforehand on a part of a surface of the glass substrate 250. The glass layer 270 is covered by the metal component 210 placed on the glass substrate 250.

Next, as illustrated by FIG. 2 (b), the assembly 260 is kept at a high temperature for a heat treatment. The heat treatment is performed to bond the metal component 210 via the glass layer 270 to the glass substrate 250. In a normal case, the temperature for the heat treatment is between 430 °C and 530 °C (e.g., 490 °C).

As a result of the heat treatment, the glass layer 270 becomes fluid. Also, the metal component 210 is temporarily bonded via the "fluid" glass layer 270 to the glass substrate 250.

Generally, thermal expansion coefficients of metal and glass differ greatly from each other. Therefore, when the assembly 260 is heated, while the metal component 210 expands particularly in a Y direction in FIG. 2 and deforms greatly, the glass substrate 250 does not expand substantially.

Then, as illustrated by FIG. 2 (c), the temperature of the assembly 260 starts to decrease from the temperature of the heat treatment. Along with the decrease of the temperature, the fluidity of the glass layer 270 starts to decrease, and the glass layer 270 hardens. As a result, the metal component 210 is bonded via the glass layer 270 to the glass substrate 250, and a hybrid sealing is formed.

Thereafter, the temperature of the assembly 260 further decreases. At this stage, because the metal component 210 is already bonded to the glass layer 270 as illustrated by FIG. 2 (c), the metal component 210 cannot contract freely in the Y direction even when the temperature decreases. That is, areas of the metal component 210 bonded to the glass layer 270 are restrained by the glass layer 270 and therefore can deform only to the same extent as the amount of contraction of the glass substrate 250 even when the temperature further decreases.

Here, when the metal component 210 has a sufficient deformation tolerance, i.e., has a relatively good elongation characteristic (elasticity), the metal component 210 can follow the contraction behavior of the glass substrate 250 even when the metal component 210 is restrained by the glass layer 270. For this reason, when the assembly 260 is cooled to the room temperature, a firm bond is obtained between the metal component 210 and the glass layer 270 as illustrated by the upper part of FIG. 2 (d). As a result, a hybrid sealing with an excellent sealing performance is formed.

On the other hand, when the metal component 210 has an insufficient deformation tolerance, i.e., does not have a good elongation characteristic (elasticity), the metal component 210, particularly the areas of the metal component 210 restrained by the glass layer 270, cannot follow a small contraction behavior of the glass substrate 250. For this reason, when the assembly 260 is cooled to the room temperature, the bond between the metal component 210 and the glass layer 270 dissociates and the metal component 210 is separated from the glass layer 270 as illustrated by the lower part of FIG. 2 (d). Thus, in this case, it is not possible to obtain a hybrid sealing.

As described above, the elongation characteristic of the metal component 210 can be an important factor that decides the bonding characteristics between the metal component 210 and the glass layer 270.

Based on the above consideration, the inventors of the present invention have conducted research on optimal combinations of materials as metal component and glass layers. The inventors have found out that when a metal component is composed of a material selected from materials whose tensile strength X (N/mm²) and breaking elongation Y (%) satisfy a relationship Y ≧ 0.10X by a room temperature tensile test (tensile speed: 1 mm/min) performed after the materials are kept at 490 °C for 40 minutes in the atmosphere, the metal component has a sufficient deformation tolerance, and a firm bond as illustrated by the upper part of FIG. 2 (d) is obtained between the metal component and a glass layer after heat treatment (hereafter, this material selection criterion is simply referred to as a "criterion A").

Thus, according to the present embodiment, a material satisfying the criterion A is selected for a metal component of a "hybrid sealing" so that the metal component and a glass layer bond well to each other.

Accordingly, the present invention makes it possible to achieve a strong bonding force between the metal component 155 and the glass layer 250 even after the heat treatment, and makes it possible to provide a "hybrid sealing" that is suitable for vacuum insulating glazing.

### <<CONFIGURATION OF SEALING>>

Next, a configuration of the sealing 150 is described in more detail.

The sealing 150 includes the metal component 155 and the first and second glass layers 160 and 165.

As described above, a material satisfying the criterion A by a room temperature tensile test, which is performed after the material is kept at 490 °C for 40 minutes in the atmosphere, is selected for the metal component 155.

The glass layers 160 and 165 are formed by calcining glass frit paste which includes a glass frit or bulk glass (e.g., glass fibers or glass ribbons). The glass layers 160 and 160 include a glass component, and may also include ceramic particles.

The first glass layer 160 and the second glass layer 165 may be made of the same material or different materials.

The thermal expansion coefficient of the glass layers 160 and 165 at a temperature of between 50 °C and 250 °C may be, for example, in a range between 70 × 10⁻⁷/K and 120×10⁻⁷/K. Setting the thermal expansion coefficient within this range reduces the difference between thermal expansion coefficients of the glass layer and the glass substrate, and makes it difficult that the glass layer and the glass substrate are separated from each other at their interface. With the present invention, a sealing including a metal component and a glass layer that bond well to each other can be obtained even when the difference of the thermal expansion coefficients between the metal component and the glass layer is large. Therefore, it is preferable to reduce the difference of the thermal expansion coefficients between the glass layer and the glass substrate.

The glass component included in the glass layers 160 and 165 may have any compositions. For example, the glass component included in the glass layers 160 and 165 may be ZnO-Bi₂O₃-B₂O₃ glass or ZnO-SnO-P₂O₅ glass.

Table 1 illustrates an exemplary composition of ZnO-Bi₂O₃-B₂O₃ glass that can be used as a glass component included in the glass layers 160 and 165. Table 2 illustrates an exemplary composition of ZnO-SnO-P₂O₅ glass that can be used as a glass component included in the glass layers 160 and 165.

**[Table 1]**

| Composition | Content (mass%) |
|---|---|
| Bi₂O₃ | 70 - 90 |
| ZnO | 5 - 15 |
| B₂O₃ | 2 - 8 |
| Al₂O₃ | 0.1 - 5 |
| SiO₂ | 0.1 - 2 |
| CeO₂ | 0.1 - 5 |
| Fe₂O₃ | 0.01 - 0.2 |
| CuO | 0.01 - 5 |

**[Table 2]**

| Composition | Content (mass%) |
|---|---|
| P₂O₅ | 27 - 35 |
| SnO | 25 - 35 |
| ZnO | 25 - 45 |
| B₂O₃ | 0 - 5 |
| Ga₂O₃ | 0 - 3 |
| CaO | 0 - 10 |
| SrO | 0 - 10 |
| Al₂O₃ | 0 - 3 |
| In₂O₃ | 0 - 3 |
| La₂O₃ | 0 - 3 |
| Al₂O₃+In₂O₃+La₂O₃ | 0 - 7 |

In the example of FIG. 1, the sealing 150 includes the metal component 155, the first glass layer 160, and the second glass layer 165. Also, the metal component 155 has a Z-like shape. One end of the Z-like shape of the metal component 155 is bonded to the first glass layer 160 formed on the first glass substrate 110, and the other end of the Z-like shape is bonded to the second glass layer 165 formed on the second glass substrate 120.

However, this configuration is just an example, and the sealing 150 may have a different configuration. For example, the first glass layer 160 may be formed on the second surface 114 of the first glass substrate 110 to face the second glass layer 165, and a metal component 155 having a U-shaped cross section may be placed between the first glass layer 160 and the second glass layer 165.

Also, instead of a metal component having a U-shaped cross section, a plate-like or foil-like metal component may be used. For example, a metal component may be formed by punching a metal plate into a frame shape that covers along the edge of vacuum insulating glazing. In this case, the first glass layer 160 is formed on the second surface 114 of the first glass substrate 110, and the second glass layer 165 is formed on the second surface 124 of the second glass substrate 120 at a position where the second glass layer 165 does not overlap the first glass layer 160 in plan view. The metal component is placed between the first glass layer 160 and the second glass layer 165 and heated together with the glass layers 160 and 165. As a result, the metal component is bonded to the second surface 114 of the first glass substrate 110 and the second surface 124 of the second glass substrate 120.

The metal component may have a foil-like shape or a plate-like shape, and may have a thickness between 0.03 mm and 0.5 mm. Setting the thickness of the metal component at a value greater than or equal to 0.03 mm reduces the chance that the metal component is broken or pinholes are formed in the metal component. Also, setting the thickness of the metal component at a value less than or equal to 0.5 mm gives a sufficient deformation tolerance to the metal component. As a result, the metal component can follow the contraction behavior of the glass substrate, and can bond well to the glass layer. The thickness of the metal component is more preferably between 0.04 mm and 0.3 mm, and further preferably between 0.05 mm and 0.2 mm.

A person skilled in the art may also think of other variations of the sealing.

### <<METHOD OF PRODUCING VACUUM INSULATING GLAZING ACCORDING TO PRESENT INVENTION>>

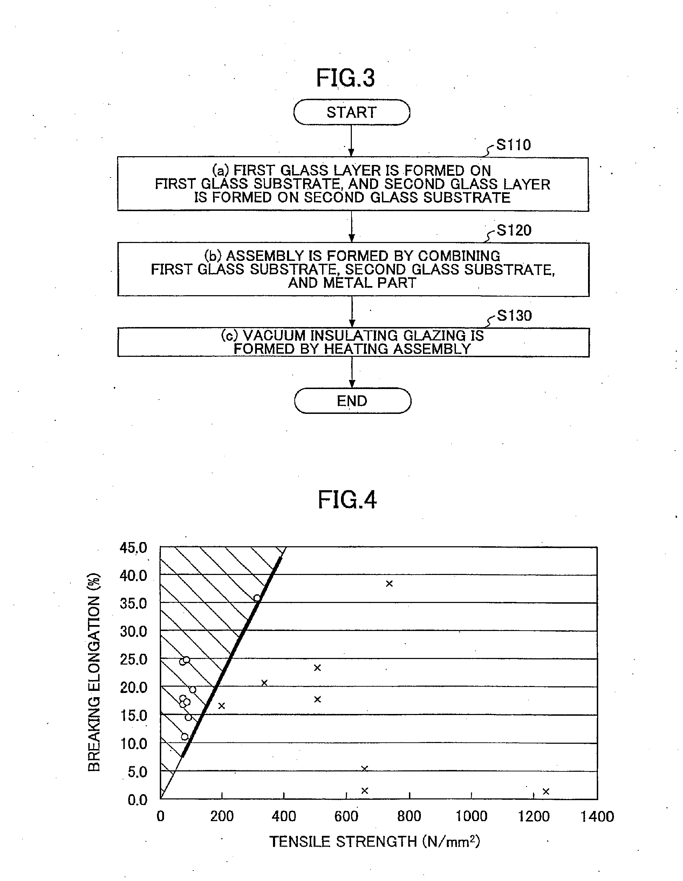

Next, an exemplary method of producing vacuum insulating glazing according to the present invention is described with reference to FIG. 3. Below, an exemplary method of producing a vacuum insulating glazing is described using the vacuum insulating glazing 100 with the configuration as illustrated by FIG. 1.

FIG. 3 is a flowchart illustrating an exemplary method of producing a vacuum insulating glazing according to the present invention.

As illustrated by FIG. 3, a method of producing a vacuum insulating glazing according to the present invention includes:
(a) a step of forming a first glass layer on a first glass substrate, and forming a second glass layer on a second glass substrate (step S110);
(b) a step of forming an assembly by combining the first glass substrate, the second glass substrate, and a metal component (step S120); and
(c) a step of forming a vacuum insulating glazing by heating at least the first glass substrate and the second glass substrate of the assembly (step S130).

Each of the above steps is described in detail below.

### <Step S110>

First, the first glass substrate 110 and the second glass substrate 120 are prepared.

Next, the first glass layer 160 is formed on the first glass substrate 110, and the second glass layer 165 is formed on the second glass substrate 120. In the example described below, the first glass layer 160 is formed on the periphery of the first surface 112 of the first glass substrate 110.

First, a paste for the first glass layer 160 is prepared. Generally, the paste includes glass frit, ceramic particles, and a vehicle (an organic binder and an organic solvent). However, ceramic particles may be omitted. The glass frit finally becomes a glass component of the first glass layer 160.

The prepared paste is applied to the periphery of the first surface 112 of the first glass substrate 110.

Next, drying treatment is performed on the first glass substrate 110 including the paste. Drying treatment conditions may be set freely as long as the organic solvent in the paste is removed. For example, the drying treatment may be performed by keeping the first glass substrate 110 at a temperature between 100 °C and 200 °C for a period of time between about one minute and about one hour.

Next, a heat treatment is performed at a high temperature on the first glass substrate 110 to pre-calcine the paste. Heating treatment conditions may be set freely as long as the organic binder in the paste is removed. For example, the heat treatment may be performed by keeping the first glass substrate 110 at a temperature between 430 °C and 470 °C for a period of time between about one minute and about one hour. As a result, the paste is pre-calcined and the first glass layer 160 is formed.

Similarly, the second glass layer 165 is formed on the periphery of the second surface 124 of the second glass substrate 120.

### <Step S120>

Next, the first glass substrate 110 and the second glass substrate 120 are combined with the metal component 155 to form an assembly. In this step, when necessary, one or more spacers 190 may be placed between the first glass substrate 110 and the second glass substrate 120.

The metal component 155 may have a plate-like shape or a foil-like shape. Also, the metal component 155 may have a Z-like shape. For example, the metal component 155 may include a first end and a second end that are bent in directions opposite to each other. In this case, the metal component 155 may be arranged on the first and second glass substrates 110 and 120 such that the first end is in contact with the first glass layer 160 and the second end is in contact with the second glass layer 165.

As described above, the metal component 155 is composed of a material selected from materials that satisfy the "criterion A", i.e., materials whose tensile strength X (N/mm²) and breaking elongation Y (%) satisfy a relationship Y ≧ 0.10X by a room temperature tensile test (tensile speed: 1 mm/min) that is performed after the materials are kept at 490 °C for 40 minutes in the atmosphere.

Examples of metal materials satisfying the "criterion A" include pure aluminum, an aluminum alloy, pure titanium, and a titanium alloy. Here, pure aluminum indicates a metal with aluminum purity of 99% or greater, and an aluminum alloy indicates a metal with aluminum purity of less than 99%. Also for other metal materials, a metal with purity of 99% or greater is referred to as "pure", and a metal with purity of less than 99% is referred to as "alloy".

There are, however, cases where a material as the metal component 155 is preferably selected from materials that do not satisfy the "criterion A" at this assembly stage (i.e., step S120).

This is because materials satisfying the criterion A are generally soft. When such a soft metal component 155 is formed in a foil-like shape, it becomes difficult to handle the metal component 155. In other words, at the stage where the assembly is formed with the metal component 155, the metal component 155 is preferably composed of a material that does not satisfy the "criterion A" and has a certain degree of rigidity so that the metal component 155 can be easily handled.

That is, the metal component 155 may be composed of a material that satisfies the criterion A after the heat treatment (step S130) is performed to bond the metal component 155 to the glass layers and make their function as a sealing.

Examples of such materials include pure aluminum and aluminum alloys. Among pure aluminum and aluminum alloys, there are metal materials whose annealing temperature is about 490 °C. Such metal materials have a certain degree of rigidity (i.e., does not satisfy the criterion A) at the stage where the assembly is formed. Then, the metal material is annealed during the heat treatment, and becomes to satisfy the criterion A and bonds well to the glass layers 160 and 165 after the heat treatment.

### <Step S130>

Next, at least the glass layers 160 and 165 of the assembly are heated. Although the heating conditions may vary depending on the combination of materials of the metal component 155 and the glass layers 160 and 165, the glass layers 160 and 165 may be kept at, for example, a temperature between about 470 °C and about 530 °C (e.g., 490 °C) for a period of time between about one minute and one hour (e.g., 40 min), and then may be cooled to the room temperature. During the heat treatment of the assembly, it is important to prevent generation of crystal phases in the glass layers. , crystal phases are generated in the glass layers. Because the crystal phases reduce the bonding force. Keeping the heat treatment condition at higher temperature and for a long period makes crystal phase generation. For this reason, the temperature of the heat treatment is preferably between 470 °C and 520 °C and more preferably between 470 °C and 500 °C, and the period of time of the heat treatment is preferably between 1 minute and 45 minutes and more preferably between 1 minute and 30 minutes.

As described above, the metal component 155 is composed of a material selected from materials satisfying the "criterion A". This makes it possible to effectively prevent the metal component 155 from being separated from the glass layers 160 and 165 because the metal component 155 cannot follow the deformation behavior of the glass layers 160 and 165 during the heat treatment and the cooling of the assembly. Thus, as a result of the heat treatment on the assembly, a firm bond is obtained between the metal component 155 and the glass layers 160 and 165. After the heat treatment is performed on the assembly, the gap 130 sealed by the sealing 150 is formed between the first glass substrate 110 and the second glass substrate 120.

Then, using an opening(s) formed beforehand in the first glass substrate and/or the second glass substrate, the gap 130 is depressurized. For example, a gas in the gap 130 is replaced with an inert gas, or the pressure in the gap 130 is reduced. Then, the opening(s) used for the depressurization process is closed. As a result, the vacuum insulating glazing 100 is formed.

The assembly may be heated in a vacuum. When the assembly is heated in a vacuum without forming an opening, the gap 130 is maintained with vacuum and the depressurization process after the heating can be omitted. Instead of a method of heating the entire assembly, local heating methods (e.g., infrared heating, electromagnetic induction heating, or laser irradiation) may be used to calcine the glass layers.

### <<EXAMPLES>>

Examples of the present invention are described below.

### <FIRST EXAMPLE>

### <BONDING CHARACTERISTICS EVALUATION TEST>

The bonding characteristics between various metal components and a glass layer were evaluated according to a method described below.

First, metal plates composed, respectively, of pure aluminum, aluminum alloys, pure nickel, stainless steels, pure titanium, an iron-nickel-cobalt alloy (kovar), and a copper-nickel alloy (cupronickel) were prepared. The materials, thickness, and Vickers hardness of the prepared metal plates (samples 1 through 17) are given in table 3. The descriptions of the metal materials comply the notation of mill sheets (inspection certificates).

**[Table 3]**

| No. | Metal Material | Thickness (mm) | Vickers Hardness (Hv) | Bonding Characteristics Evaluation | Tensile Test Results | |
|---|---|---|---|---|---|---|
| | | | | | Tensile Strength (N/mm²) | Breaking Elongation (%) |
| 1 | Aluminum alloy A3003-H18 | 0.1 | 71 | ○ | 105 | 19.4 |
| 2 | Aluminum alloy A5052-O | 0.15 | 52.1 | × | 200 | 16.5 |
| 3 | Pure aluminum A1050-H24 | 0.2 | 40.8 | ○ | 83 | 17.2 |
| 4 | Pure aluminum A1050P-O | 0.1 | 20.4 | ○ | 69 | 16.8 |
| 5 | Pure aluminum AlN30-O | 0.1 | 21.6 | ○ | 72 | 17.7 |
| 6 | Pure aluminum A1N30-H18 | 0.1 | 49.6 | ○ | 78 | 11.1 |
| 7 | Pure aluminum A1N30-O | 0.15 | 21.4 | ○ | 71 | 24.4 |
| 8 | Pure aluminum A1N30-H18 | 0.15 | 49 | ○ | 82 | 24.6 |
| 9 | Pure aluminum A1050P-O | 0.2 | 21.7 | ○ | 87 | 14.4 |
| 10 | Pure nickel Ni-BA | 0.1 | 73.2 | × | 338 | 20.6 |
| 11 | Pure nickel VNiR-H | 0.1 | 228.7 | × | 662 | 1.8 |
| 12 | Stainless steel SUS304-H | 0.1 | 370.6 | × | 1244 | 1.5 |
| 13 | Stainless steel SUS304-O | 0.1 | 198.8 | × | 738 | 38.5 |
| 14 | Pure titanium TR270C-H | 0.1 | 221.5 | × | 508 | 23.3 |
| 15 | Pure titanium TR270C-O | 0.1 | 140.7 | ○ | 320 | 35.5 |
| 16 | Kovar Kov-BA | 0.1 | 155.1 | × | 508 | 17.8 |
| 17 | Cupronickel H Cu70/Ni30 | 0.1 | 209.2 | × | 663 | 5.4 |

Next, a glass substrate including a glass layer was prepared as described below.

A glass substrate (soda-lime glass of Asahi Glass Co., Ltd.) with a length of 50 mm, a width of 230 mm, and a thickness of 2.8 mm was prepared. A glass layer was formed at one end of a surface of the glass substrate as described below.

First, a paste including a glass frit, ceramic particles, and a vehicle (an organic binder and an organic solvent) was prepared. As the glass frit, a ZnO-Bi₂O₃-B₂O₃ glass frit with a composition indicated in table 4 was used. The thermal expansion coefficient of the glass frit is about 105×10⁻⁷/K. As the ceramic particles, cordierite was used. As the vehicle, a mixture of ethyl cellulose, propylene glycol diacetate (1,2-diacetoxypropane), and terpineol was used.

**[Table 4]**

| Composition | Content (mass%) |
|---|---|
| Bi₂O₃ | 81.4 |
| ZnO | 10.5 |
| B₂O₃ | 6.0 |
| Al₂O₃ | 0.9 |
| SiO₂ | 0.7 |
| CeO₂ | 0.2 |
| Fe₂O₃ | 0.1 |
| CuO | 0.2 |

Next, the prepared paste was applied to one end (an area of about 230 mm x about 15 mm) of a surface of the glass substrate. After the paste was dried, the glass substrate was heat-treated at 380 °C for 30 minutes to pre-calcine the paste. As a result, a glass layer was formed at a position on the glass substrate where the paste was applied.

Next, a metal plate, i.e., one of samples 1 through 17, was placed on the glass substrate to obtain an assembly. The metal plate was placed on the glass substrate such that the glass layer was completely covered.

Next, the obtained assembly was kept at 490 °C for 40 minutes, and cooled to the room temperature. Then, whether the metal plate and the glass layer were bonded together was evaluated. The evaluation was performed by determining whether the metal plate and the glass layer were bonded together or separate from each other.

Results obtained for samples 1 through 17 are given in the "Bonding Characteristics Evaluation" field of table 3 above. In the "Bonding Characteristics Evaluation" field, "○" indicates that the metal plate bonded to the glass layer, and "×" indicates that the metal plate did not bond to the glass layer.

The results of the bonding characteristics evaluation test indicate that pure nickel, stainless steels, kovar, and cupronickel do not bond well to the glass layer.

On the other hand, the results of the bonding characteristics evaluation test indicate that pure aluminum, aluminum alloys other than pure aluminum, and pure titanium generally bond well to the glass layer. However, among the aluminum alloys, A5052-O (2.5%Mg) does not bond well to the glass layer. Also, pure titanium TR270C-H (hard titanium) does not bond well to the glass layer.

Thus, the results of the bonding characteristics evaluation test indicate that the bonding force between a metal component and a glass layer may become insufficient depending on a combination of materials of the metal component and the glass layer.

### <ROOM TEMPERATURE TENSILE TEST>

Next, a tensile test was performed at the room temperature using metal plates composed of metal materials indicated in table 1 above.

In the tensile test, each of the metal plates was cut into a rectangular specimen (with a length of 50 mm and a width of 10 mm), and ends of the specimen in the length direction were fixed on a tensile test apparatus. The inter-chuck distance between the both ends of the specimen was set at 20 mm and the tensile speed was set at 1 mm/min to measure the tensile strength and the breaking elongation of each metal material. The thickness of each specimen was indicated in table 3. Also, the ambient temperature during the test was the room temperature.

Before the tensile test, the metal materials of samples 1 through 17 were heat-treated according to the following heat treatment conditions: the metal materials were heated up to 490 °C at a temperature rise rate of 10 °C/min, kept at 490 °C for 40 minutes, and then cooled to the room temperature at a rate of 10 °C /min. This is to simulate a thermal history that a metal component experiences when the metal component is actually used as a part of a sealing.

The tensile strength and the breaking elongation of the respective metal materials of samples 1 through 17 obtained by the tensile test are given in the "Tensile Test Results" field of table 3 above. The tensile strength was obtained by dividing a load (N) at the time when a specimen breaks by a cross-sectional area (mm²) of the specimen. The breaking elongation was obtained as a percentage (%) by which a distance between two points on a specimen increased after the tensile test from a distance between the two points before the tensile test. The tensile test results indicate that the metal materials that bonded to the glass layer in the bonding characteristics evaluation test have comparatively large breaking elongation values relative to tensile strength values, and thus have relatively high ductility.

FIG. 4 is a graph plotting relationships between tensile strength and breaking elongation of the metal materials of samples 1-17 obtained by the tensile test. Points represented by "○" indicate values of samples that bonded to the glass layer by the bonding characteristics evaluation test described above, and points represented by "×" indicate values of samples that did not bond to the glass layer.

According to FIG. 4, the points "○" and the points "×" are clearly distinguished. When X (N/mm²) indicates the tensile strength and Y (%) indicates the breaking elongation of the metal materials, the boundary between one area where the points "○" are plotted and the other area where the points "×" are plotted can be represented by Y=0.10X.

With a graph as plotted by FIG. 4, it is possible to determine whether a metal material is likely to bond well to a glass layer. That is, it is possible to determine whether a metal material is likely to bond well to a glass layer by plotting a relationship between tensile strength X (N/mm²) and breaking elongation Y (%) of the metal material that are measured by a room temperature tensile test (tensile speed: 1 mm/min) performed after the metal material is kept at 490 °C for 40 minutes in the atmosphere, and by determining whether the plotted relationship satisfies Y ≧ 0.10X (the "criterion A" described above).

The annealing temperature of some types of pure aluminum and aluminum alloys exists in a temperature range around 490 °C. Such pure aluminum and aluminum alloys become to satisfy the above "criterion A" only after they are heat-treated, i.e., after they are kept at 490 °C for 40 minutes in the atmosphere. In other words, such pure aluminum and aluminum alloys do not satisfy the "criterion A" until the heat treatment is performed on them.

Such pure aluminum and aluminum alloys are particularly preferable as materials of a metal component of a sealing. Using such a material as a metal component makes it easier to handle the metal component in a step of forming an assembly that is performed before the metal component and glass substrates are heated to produce a vacuum insulating glazing including a "hybrid sealing".

As described above, generally, materials satisfying the criterion A are relatively soft. When such a soft material is used for a metal component, it becomes difficult to handle the metal component. However, when, for example, an aluminum alloy whose annealing temperature is in a temperature range around 490 °C is used for a metal component, the metal component has a certain degree of rigidity at the stage where an assembly is formed, then becomes to satisfy the "criterion A" after it is heat-treated.

Examples of pure aluminum and aluminum alloys that do not satisfy the "criterion A" before the heat treatment and satisfy the "criterion A" after the heat treatment include A3003-H18 of sample 1, A1050-H24 of sample 3, and A1N30-H18 of samples 6 and 8.

Results of tensile tests performed on these pure aluminum and aluminum alloys before and after the heat treatment are given in table 5. The conditions of the tensile tests are the same as described above.

**[Table 5]**

| No. | Metal Material | Thickness (mm) | Heat Treatment 490°C, 40 min | Vickers Hardness (Hv) | Tensile Test Results | |
|---|---|---|---|---|---|---|
| | | | | | Tensile Strength (N/mm²) | Breaking Elongation (%) |
| 1 | Aluminum alloy A3003-H18 | 0.1 | Not Performed | 71 | 231 | 0.7 |
| | | | Performed | - | 105 | 19.4 |
| 3 | Pure aluminum A1050-H24 | 0.2 | Not Performed | 40.8 | 125 | 1.7 |
| | | | Performed | - | 83 | 17.2 |
| 6 | Pure aluminum A1N30-H18 | 0.1 | Not Performed | 49. 6 | 173 | 9.1 |
| | | | Performed | - | 78 | 11.1 |
| 8 | Pure aluminum A1N30-H18 | 0.15 | Not Performed | 49 | 162 | 0.5 |
| | | | Performed | - | 82 | 24.6 |

Results in table 5 indicate that the pure aluminum and the aluminum alloy of samples 1, 3, 6, and 8 satisfy the "criterion A" only after they are heat-treated at 490 °C for 40 minutes.

### <SECOND EXAMPLE>

The bonding forces between metal material samples that bonded to the glass layer by the bonding characteristics evaluation test (i.e., the metal material samples indicated by "○") and the glass layer were quantitatively evaluated by a method described below.

### <PREPARATION OF SPECIMENS>

Evaluation specimens were prepared as described below.

First, in a manner similar to that described in the first example, a glass substrate including a glass layer was prepared. In the second example, however, the dimension of a glass substrate was 50 mm in length, 230 mm in width, and 2.8 mm in thickness, and the dimension of the glass layer was about 5 mm in length and about 5 mm in width.

Next, three types of metal component were prepared: a first metal component composed of pure aluminum A1050-H24 and having a thickness of 0.2 mm, a second metal component composed of pure aluminum A1N30-H18 and having a thickness of 0.1 mm, and a third metal component composed of pure aluminum A1N30-H18 and having a thickness of 0.15 mm. The dimension of these metal components was 50 mm in length and 10mm in width.

Next, each metal component and the glass substrate were stacked at the position of the glass layer, and the heat treatment was performed. As a result, the metal component was bonded via the glass layer to the glass substrate. Through the above process, three evaluation specimens (No. 1 through No. 3) were prepared. The condition of the heat treatment was at 490 °C for 40 minutes in the atmosphere.

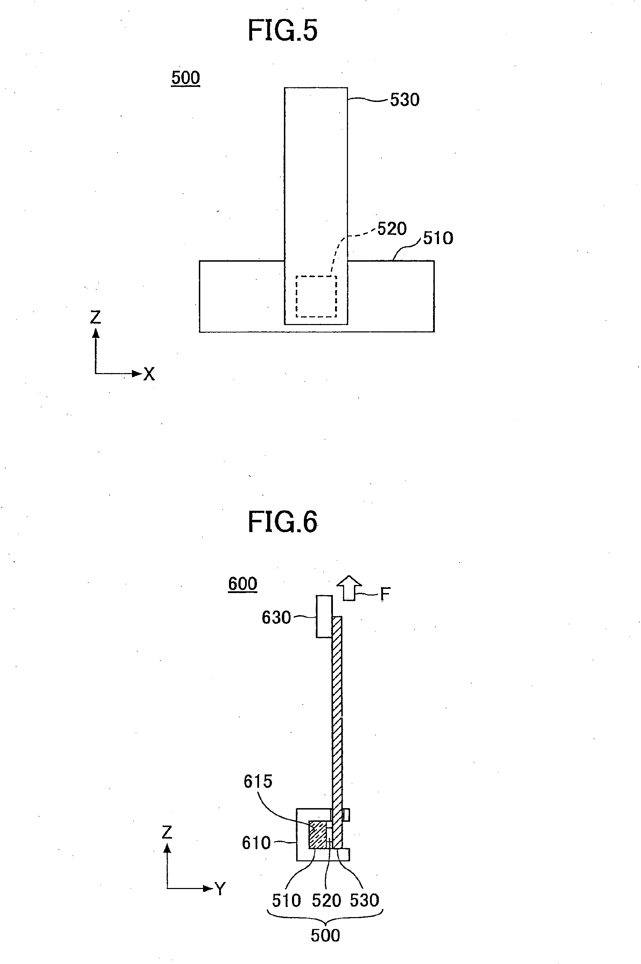

FIG. 5 is a plan view of an evaluation specimen 500 obtained in the above process. As illustrated by FIG. 5, the evaluation specimen 500 includes a glass substrate 510 and a metal component 530. One end of a metal component 530 was stacked at the position of a glass layer 520 formed on the glass substrate 510.

Specifications of the evaluation specimens No. 1 through No. 3 are given in table 6.

**[Table 6]**

| No. | Metal Component | | Bonding Force Evaluation Test Results | |
|---|---|---|---|---|
| | Material | Thickness (mm) | Breaking Mode | Breaking Load (N) |
| 1 | Pure aluminum A1050-H24 | 0.2 | Breaking of metal component | 134 |
| 2 | Pure aluminum A1N30-H18 | 0.1 | Breaking of metal component | 70 |
| 3 | Pure aluminum A1N30-H18 | 0.15 | Breaking of metal component | 104 |

### <BONDING FORCE EVALUATION TEST>

A bonding force evaluation test was performed using the evaluation specimens No. 1 through No. 3.

The bonding force evaluation test was performed by pulling each evaluation specimen until it breaks.

FIG. 6 is a schematic diagram of a test apparatus 600.

The test apparatus 600 includes a jig 610 for holding the evaluation specimen 500 and a holder 630 for pulling the evaluation specimen 500 upward.

During the test, the glass substrate 510 of the evaluation specimen 500 was attached to a side surface 615 of the jig 610 using an insulating-faced adhesive tape. Also, an end (which is not bonded to the glass layer 520) of the metal component 530 of the evaluation specimen 500 was attached to the holder 630. Also, a strain gauge (not shown) was attached to a predetermined position of the metal component 530 of the evaluation specimen 500.

With the jig 610 fixed, the evaluation specimen 500 was pulled via the holder 630 in a direction indicated by an arrow F (upward). The tensile speed was set at 1 mm/min. The test was continued until the evaluation specimen 500 broke, and a load (N) and a displacement (mm) at the time when the evaluation specimen 500 broke were measured.

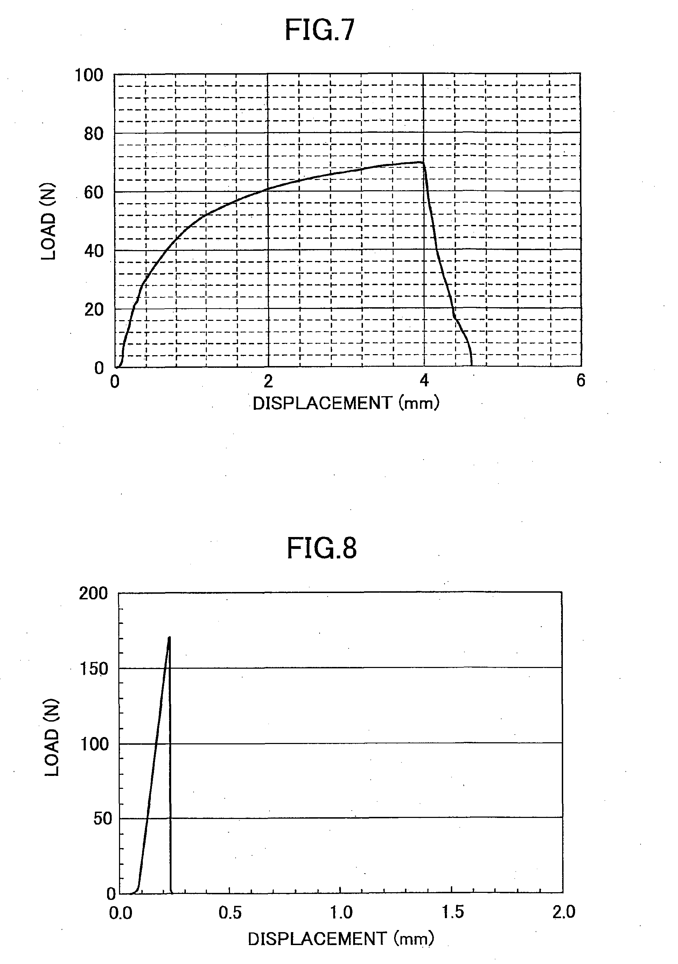

FIG. 7 is a graph illustrating a relationship between a displacement (mm) and a load (N) measured by the evaluation specimen No. 1.

The evaluation specimen 500 was examined after the test, and it was found out that the metal component 530 of the evaluation specimen 500 broke at a position other than a bonded portion of the metal component 530 with the glass layer 520.

The relationship between the measured displacement (mm) and load (N) illustrated by FIG. 7 is similar to the behavior of a simple aluminum component observed by a tensile test. This indicates that there was a firm bond between the metal component 530 and the glass layer 520 of the evaluation specimen 500 used in the bonding force evaluation test. That is, it can be considered that because a firm bond exists between the metal component 530 and the glass layer 520, the relationship between the displacement (mm) and the load (N) measured by the bonding force evaluation test matched the behavior of the metal component 530 observed by a tensile test performed using only the metal component 530.

Similar behaviors were also observed for the evaluation specimens No. 2 and No. 3.

Results of the bonding force evaluation test performed on the evaluation specimens No. 1 through No. 3 are given in table 6 above. In table 6, the breaking mode indicates whether the breaking of the evaluation specimen occurs the breaking of the metal component or the separation of the metal component and the glass layer at their interface. Also, the breaking load indicates a load being applied when the evaluation specimen broke.

As indicated by table 6, the breaking loads of the evaluation specimens No. 1 through No. 3 were 134 N, 70 N, and 104 N, respectively, which are sufficiently large. Also, the breaking mode of all cases of the evaluation specimens No. 1 through No. 3 was the breaking of the metal component. This indicates that there was a firm bond between the glass layer and the metal component.

### <THIRD EXAMPLE>

In a third example, an evaluation specimen was prepared in a manner similar to the second example except that pure titanium (TR270C-O) with a thickness of 0.1 mm was used as the metal component, and a bonding force evaluation test was performed using the prepared evaluation specimen.

Specifications of the evaluation specimen (No. 4) are given in table 7.

**[Table 7]**

| No. | Metal Component | | Bonding Force Evaluation Test Results | |
|---|---|---|---|---|
| | Material | Thickness (mm) | Breaking Mode | Breaking Load (N) |
| 4 | Pure titanium TR270C-O | 0.1 | Interfacial separation of metal component and glass layer | 171 |

Results of the bonding force evaluation test performed on the evaluation specimen No. 4 are indicated by FIG. 8. The breaking of the evaluation specimen No. 4 was caused by separation of the metal component and the glass layer at their interface.

FIG. 8 is a graph illustrating a relationship between a displacement (mm) and a load (N) observed before the metal component and the glass layer of the evaluation specimen No. 4 separated from each other at their interface.

As illustrated by FIG. 8, the relationship between the displacement (mm) and the load (N) observed before the metal component and the glass layer of the evaluation specimen No. 4 separated from each other at their interface greatly differs from the relationship between the displacement (mm) and the load (N) observed in the test where the metal component of the evaluation specimens No. 1 through No.3 broke.

The tensile strength of the evaluation specimen No.4 measured in the bonding force evaluation test is given in table 7 above. As indicated in FIG. 7, the metal component and the glass layer of the evaluation specimen No. 4 separated from each other at their interface, and the breaking load was 171 N. The breaking load of the evaluation specimen No. 4 is greater than the breaking loads of pure aluminum in table 6.

Thus, unlike the evaluation specimens No. 1 through No. 3 whose breaking mode was "breaking of metal component", the breaking mode of the evaluation specimen No. 4 was "interfacial separation of metal component and glass layer". Still, however, the test results of the evaluation specimen No. 4 indicate that there was a firm bond between the metal component and the glass layer.

Thus, it was confirmed that a tendency of bond creation with a glass layer for the metal component can be determined by judging whether the metal component satisfies the "criterion A" after being kept at 490 °C for 40 minutes in the atmosphere.

### <FOURTH EXAMPLE>

A specimen was prepared by stacking a metal plate composed of pure aluminum (A1N30-H18) and having a length of 10 mm, a width of 20 mm, and a thickness of 0.1 mm, via a ZnO-SnO-P₂O₅ glass ribbon with a length of 5 mm, a width of 15 mm, and a thickness of 0.1 mm, on a glass substrate (soda-lime glass of Asahi Glass Co., Ltd.) with a length of 10 mm, a width of 20 mm, and a thickness of 2.8 mm. Then, the specimen was heat-treated at 450 °C for 10 minutes. The composition of the ZnO-SnO-P₂O₅ glass ribbon was as follows: P₂O₅ 30%, SnO 32%, ZnO 36%, B₂O₃ 1%, CaO 0.5%, and Al₂O₃ 0.5%.

The glass ribbon softened as a result of the heat treatment, and the glass substrate and the metal plate were bonded together. Accordingly, the result of a bonding characteristics evaluation test performed on the specimen in a manner similar to the first example was "○".

The fourth example confirmed that the metal plate and the glass substrate can be bonded together even when a ZnO-SnO-P₂O₅ glass is used as a glass layer.

### INDUSTRIAL APPLICABILITY

The present invention can be applied to vacuum insulating glazing used, for example, for a windowpane of a building.

The present application is based on and claims the benefit of priority of Japanese Patent Application No. 2012-092368 filed on April 13, 2012, the entire contents of which are hereby incorporated herein by reference.

### EXPLANATION OF REFERENCES

- 100: Vacuum insulating glazing according to the present invention
- 110: First glass substrate
- 112: First surface
- 114: Second surface
- 120: Second glass substrate
- 122: First surface
- 124: Second surface
- 130: Gap
- 150: Sealing
- 155: Metal component
- 160: First glass layer
- 165: Second glass layer
- 190: Spacer
- 210: Metal component
- 250: Glass substrate
- 260: Assembly
- 270: Glass layer
- 500: Evaluation specimen
- 510: Glass substrate
- 520: Glass layer
- 530: Metal component
- 600: Test apparatus
- 610: Jig
- 615: Side surface
- 630: Holder

## Claims

1. A vacuum insulating glazing, comprising:
first and second glass substrates that are stacked leaving a gap, the gap being set at a pressure less than an atmospheric pressure; and
a sealing that seals the gap,
wherein the sealing includes a metal component and a glass layer that bonds the metal component and the glass substrates; and
wherein a material as the metal component is selected from materials whose tensile strength X (N/mm²) and breaking elongation Y (%) satisfy a relationship Y ≧ 0.10X by a room temperature tensile test (tensile speed: 1 mm/min) that is performed after the materials are kept at 490 °C for 40 minutes in an atmosphere.

2. The vacuum insulating glazing as claimed in claim 1, wherein the metal component has a thickness between 0.03 mm and 0.5 mm.

3. The vacuum insulating glazing as claimed in claim 1 or 2, wherein the material for the metal component is selected from the materials whose tensile strength X (N/mm²) and breaking elongation Y (%) do not satisfy the relationship Y ≧ 0.10X by a room temperature tensile test (tensile speed: 1 mm/min) that is performed before the materials are kept at 490 °C for 40 minutes in the atmosphere.

4. The vacuum insulating glazing as claimed in any one of claims 1 through 3, wherein the metal component includes at least one component selected from the group consisting of pure aluminum, an aluminum alloy, pure titanium, and a titanium alloy.

5. The vacuum insulating glazing as claimed in any one of claims 1 through 4, wherein the glass layer includes a glass component whose thermal expansion coefficient at a temperature between 50 °C and 250 °C is greater than or equal to 70 × 10⁻⁷/K and less than or equal to 120×10⁻⁷/K.

6. The vacuum insulating glazing as claimed in any one of claims 1 through 5, wherein the glass layer includes a glass component that is ZnO-Bi₂O₃-B₂O₃ glass.

7. The vacuum insulating glazing as claimed in claim 6, wherein the glass component included in the glass layer has a following composition in terms of mass percentage of oxide:
Bi₂O₃ 70%-90%, ZnO 5%-15%, B₂O₃ 2%-8%, Al₂O₃ 0.1%-5%, SiO₂ 0.1%-2%, CeO₂ 0.1%-5%, Fe₂O₃ 0.01%-0.2%, and CuO 0.01%-5%.

8. The vacuum insulating glazing as claimed in any one of claims 1 through 5, wherein the glass layer includes a glass component that is ZnO-SnO-P₂O₅ glass.

9. The vacuum insulating glazing as claimed in claim 6, wherein the glass component included in the glass layer has a following composition in terms of mass percentage of oxide:
P₂O₅ 27%-35%, SnO 25%-35%, ZnO 25%-45%, B₂O₃ 0%-5%, Ga₂O₃ 0%-3%, CaO 0%-10%, SrO 0%-10%, Al₂O₃ 0%-3%, In₂O₃ 0%-3%, La₂O₃ 0%-3%, and Al₂O₃+In₂O₃+La₂O₃ 0%-7%.

10. The vacuum insulating glazing as claimed in any one of claims 1 through 9, wherein
the metal component includes a first portion and a second portion; and
the first portion of the metal component is bonded to a first glass layer formed on the first glass substrate and the second portion of the metal component is bonded to a second glass layer formed on the second glass substrate to form the sealing.

11. A sealing of a vacuum insulating glazing including first and second glass substrates stacked with a gap, the gap being set at a pressure less than an atmospheric pressure and sealed by the sealing, the sealing comprising:
a metal component; and
a glass layer that bonds the metal component and the glass substrates,
wherein a material as the metal component is selected from materials whose tensile strength X (N/mm²) and breaking elongation Y (%) satisfy a relationship Y ≧ 0.10X by a room temperature tensile test (tensile speed: 1 mm/min) that is performed after the materials are kept at 490 °C for 40 minutes in an atmosphere.

12. A method of producing a vacuum insulating glazing including first and second glass substrates stacked with a gap, the gap being set at a pressure less than an atmospheric pressure, the method comprising:
forming of a first glass layer on the first glass substrate and forming a second glass layer on the second glass substrate;
forming an assembly including the gap formed therein by assembling a metal component with the first and second substrates such that the metal component contacts the first and second glass layers, a material as the metal component being selected from materials whose tensile strength X (N/mm²) and breaking elongation Y (%) satisfy a relationship Y ≧ 0.10X by a room temperature tensile test (tensile speed: 1 mm/min) that is performed after the materials are kept at 490 °C for 40 minutes in an atmosphere;
heating at least the first and second glass layers of the assembly to bond the first and second glass layers and the metal component; and
depressurizing the gap.

13. The method as claimed in claim 12, wherein in the heating process, at least the first and second glass layers of the assembly are kept at a temperature between 470 °C and 530 °C for a period of time between one minute and one hour, and are then cooled to a room temperature.
